# EUROPÄISCHE PATENTSCHRIFT

(11) **EP 2 901 147 B1**
(45) Veröffentlichungstag und Bekanntmachung des Hinweises auf die Patenterteilung: **13.05.2020**
(21) Anmeldenummer: 12770069.8
(22) Anmeldetag: 26.09.2012
(51) Int. Cl.: G01N 30/42, B04B 5/06

(54) **EXTRAKTOR FÜR EINE ZENTRIFUGALVERTEILUNGSEXTRAKTION UND VERFAHREN ZUR DURCHFÜHRUNG EINER ZENTRIFUGALEXTRAKTION**
EXTRACTOR FOR CENTRIFUGAL PARTITION EXTRACTION AND METHOD FOR PERFORMING CENTRIFUGAL PARTITION EXTRACTION
EXTRACTEUR POUR EXTRACTION DE PARTAGE CENTRIFUGE ET PROCÉDÉ DE RÉALISATION D'UNE EXTRACTION CENTRIFUGE

(43) Veröffentlichungstag der Anmeldung: 05.08.2015
(73) Patentinhaber: Technische Universität Dortmund, 44227 Dortmund (DE)
(72) Erfinder: SCHEMBECKER, Gerhard, 44357 Dortmund (DE); ADELMANN, Stephan, 40233 Düsseldorf (DE); SCHWIENHEER, Christoph, 44139 Dortmund (DE)
(74) Vertreter: Michalski Hüttermann & Partner Patentanwälte mbB
(86) Internationale Anmeldenummer: PCT/EP2012/068999
(87) Internationale Veröffentlichungsnummer: WO 2014/048469

(56) Entgegenhaltungen:
- WO-A1-2010/010366
- FR-A1- 2 907 686
- MARCHAL L ET AL: "Centrifugal partition chromatography: a survey of its history, and our recent advances in the field", CHEMICAL RECORD, JOHN WILEY, NEW YORK, NY, US, Bd. 3, Nr. 3, 1. Januar 2003 (2003-01-01), Seiten 133-143, XP002452497, ISSN: 1527-8999, DOI: 10.1002/TCR.10057

## Beschreibung

Die Erfindung betrifft einen Extraktor für eine Zentrifugalverteilungsextraktion und ein Verfahren zur Durchführung einer Zentrifugalextraktion, mit deren Hilfe eine Probe, die unterschiedlich gut in einer schweren Phase und einer leichten Phase lösliche Komponenten aufweist separiert werden kann, wobei die Entstehung der Erfindung vom Bundesministerium für Bildung und Forschung (BMBF) der Bundesrepublik Deutschland im Rahmen des Förderprojekts "Optimierung der Zugänglichkeit mikrobieller Sekundärmetabolite" (Förderkennzeichen: 0315404C) im Verbundprojekt "Bioindustrie 2021" unterstützt wurde.

Es ist bekannt eine Probe, die unterschiedlich gut in einer schweren Phase und einer leichten Phase lösliche Komponenten aufweist, mit Hilfe einer diskontinuierlichen Zentrifugalverteilungschromatographie (CPC) nach dem Prinzip der Chromatographie zeitlich zu trennen. Hierzu ist ein Chromatographie-Rotor mit einer Kammerkaskade vorgesehen, der rotiert wird, so dass die schwere Phase und die leichte Phase der über einen Kanal nachfolgend miteinander verbundenen Kammern einem Zentrifugalfeld ausgesetzt werden. Die schwere Phase setzt sich radial außen ab, während sich die leichte Phase radial innen absetzt. Eine der Phasen, beispielsweise die leichte Phase, wird mit der Probe beaufschlagt und als mobile Phase durch die Kammerkaskade gepumpt, wobei die mobile Phase in jeder nachfolgenden Kammer durch die andere als stationäre Phase wirkende Phase hindurch geführt wird. Aufgrund der unterschiedlichen Löslichkeiten der Komponenten der Probe verweilt die leichter in der stationären Phase lösliche Komponente länger in der Kammerkaskade, so dass am Ausgang der Kammerkaskade zunächst die schwerer in der stationären Phase lösliche Komponente und erst später die leichter in der stationären Phase lösliche Komponente austritt. Dadurch erfolgt eine zeitliche Trennung verschieden löslicher Komponenten, welche als Fraktionen am Ausgang der Kammerkaskade aufgefangen werden. Aus US 2006/0243665 A1 ist ein Zentrifugalextraktor mit einer Kammerkaskade mit einer schweren Phase und einer leichten Phase bekannt, bei dem die nachfolgenden Kammern der Kammerkaskade über genau einen Kanal miteinander verbunden sind. Zur Separation einer in die Kammerkaskade eingespritzten Probe, die unterschiedlich gut in der schweren Phase und der leichten Phase lösliche Komponenten aufweist, wird über eine gewisse Zeitspanne die leichte Phase als mobile Phase in einer Umfangsrichtung durch die Kammerkaskade und anschließend über eine gewisse Zeitspanne die schwere Phase als mobile Phase in einer entgegen gesetzten Umfangsrichtung durch die Kammerkaskade gepumpt. Dadurch kommt es zu einem zeitlich wechselnden Austrag der Komponenten entsprechend ihrer Löslichkeit in der jeweils mobilen Phase an jeweils einem Ende der Kammerkaskade. Hierbei wird jedoch eine bereits angereicherte Phase, die sich in dem Kanal zwischen zwei nachfolgenden Kammern befindet, bei einem Wechsel der mobilen Phase zurückgepumpt, wodurch sich die Trennleistung des Zentrifugalextraktors verschlechtert und kein stationärer Zustand erreicht werden kann.

Aus DE 10 2006 028 129 A1 ist ein Zentrifugalextraktor mit einer Kammerkaskade mit einer schweren Phase und einer leichten Phase bekannt, bei dem sowohl die schwere Phase als auch die leichte Phase gleichzeitig als mobile Phase im Gegenstrom gepumpt werden, um eine in die Kammerkaskade eingespritzte Probe, die unterschiedlich gut in der schweren Phase und der leichten Phase lösliche Komponenten aufweist, separieren zu können. Nachfolgende Kammern der Kammerkaskade sind hierbei über einen ersten Kanal, um die schwere Phase von einer ersten Kammer zu einer zweiten Kammer zu pumpen, und einen zweiten Kanal um die leichte Phase von der zweiten Kammer zu der ersten Kammer zu pumpen, verbunden.

Untersuchungen haben ergeben, dass auch bei diesem Zentrifugalextraktor eine unbefriedigende Trennleistung, sofern überhaupt vorhanden, zu erwarten ist.

Aus FR 2 907 686 A1 ist ein im Gegenstrom betriebener Zentrifugalverteilungsextraktor bekannt.

Aus WO 2010/010366 A1 ist ein Verfahren zur Gegenstromchromatographie bekannt, bei dem eine polare Phase und eine unpolare Phase mit Hilfe eines Reglers alternierend mit einer Zykluszeit von 4 Minuten in unterschiedliche Richtungen durch eine Kammerkaskade gepumpt werden.

Es ist die Aufgabe der Erfindung Maßnahmen aufzuzeigen, die eine gute Trennleistung bei einer Zentrifugalextraktion ermöglichen.

Die Lösung der Aufgabe erfolgt erfindungsgemäß durch einen Extraktor mit den Merkmalen des Anspruchs 1 sowie ein Verfahren zur Durchführung einer Zentrifugalextraktion mit den Merkmalen des Anspruchs 7. Bevorzugte Ausgestaltungen der Erfindung sind in den Unteransprüchen angegeben, die jeweils einzeln oder in Kombination einen Aspekt der Erfindung darstellen können.

Ein Aspekt der Erfindung betrifft einen Extraktor für eine Zentrifugalverteilungsextraktion, mit einer in Umfangsrichtung eines designierten Zentrifugalfelds angeordneten Kammerkaskade zur Aufnahme einer schweren Phase und einer leichten Phase, wobei die Kammerkaskade mindestens eine erste Kammer und mindestens eine zweite Kammer aufweist, einer mit der Kammerkaskade verbundenen ersten Pumpeinrichtung zum Pumpen der schweren Phase durch die Kammerkaskade entlang einer ersten Umfangsrichtung, einer mit der Kammerkaskade verbundenen zweiten Pumpeinrichtung zum Pumpen der leichten Phase durch die Kammerkaskade entlang einer der ersten Umfangsrichtung entgegen gesetzten zweiten Umfangsrichtung, einem mit der ersten Kammer und der zweiten Kammer verbundenen ersten Kanal zur Abfuhr der schweren Phase aus der ersten Kammer und zur Zufuhr der schweren Phase in die zweite Kammer und einem mit der zweiten Kammer und der ersten Kammer verbundenen zweiten Kanal zur Abfuhr der leichten Phase aus der zweiten Kammer und zur Zufuhr der leichten Phase in die erste Kammer, wobei der erste Kanal ein erstes Ventil zu Sperrung einer Rückströmung von der zweiten Kammer in die erste Kammer und/oder der zweite Kanal ein zweites Ventil zu Sperrung einer Rückströmung von der ersten Kammer in die zweite Kammer aufweist und eine Steuereinrichtung zum Betrieb der ersten Pumpeinrichtung und der zweiten Pumpeinrichtung vorgesehen ist, wobei die Steuereinrichtung derart ausgestaltet ist, dass im regulären Betrieb entweder die ersten Pumpeinrichtung mit einer ersten Zykluszeit t₁ oder die zweite Pumpeinrichtung mit einer zweiten Zykluszeit t₂ betrieben wird, wobei mit Hilfe des ersten Ventils und/oder des zweiten Ventils eine Strömung nur entlang der beabsichtigten Strömungsrichtung sichergestellt ist und die erste Zykluszeit t₁ und die zweite Zykluszeit t₂ derart gewählt sind, dass ein vollständiger Durchfluss des ersten Kanals im Wesentlichen nur durch die schwere Phase und ein vollständiger Durchfluss des zweiten Kanals im Wesentlichen nur durch die leichte Phase erfolgt.

Durch das erste Ventil und das zweite Ventil kann sichergestellt werden, dass eine Strömung in dem ersten Kanal und dem zweiten Kanal nur entlang der beabsichtigten Strömungsrichtung erfolgt. Kurzschluss-Strömungen oder Rückströmungen können dadurch sicher vermieden werden. Ferner ist es möglich auch längere Zykluszeiten t₁ und t₂ zuzulassen, ohne eine verschlechterte Trennleistung durch unerwünschte Strömungseffekte zu riskieren.

Da nachfolgende Kammern nicht durch einen einzigen sondern durch zwei verschiedene Kanäle verbunden sind, ist es möglich sowohl die schwere Phase als auch die leichte Phase gleichzeitig oder nacheinander als mobile Phase zu verwenden, um den Extraktor im Gegenstromprinzip betreiben zu können. Zur Vermeidung von Kurzschlussströmungen kann insbesondere der für die jeweils nicht gepumpte Phase vorgesehene Ausgang versperrt werden. Da für die schwere Phase und die leichte Phase unterschiedliche Kanäle verwendet werden, wird vermieden, dass eine bereits mit der besser löslichen Komponente der Probe aufkonzentrierte Phase vollständig aus dem jeweiligen Kanal in die vorherige Kammer von der jeweils anderen Phase zurückgedrückt wird. Es wird vermieden, dass ein mit der einen Phase gefüllter Kanal von der anderen Phase gespült wird, so dass es insbesondere möglich ist vergleichsweise kleine Volumina für die einzelnen Kammern vorzusehen ohne durch Rückspülungseffekt eine unbefriedigende Trennleistung hinnehmen zu müssen. Hierbei sind zusätzlich die Zykluszeiten t₁ und t₂ derart kurz gewählt, dass Phase über eine unabsichtliche Kurzschluss-Strömung von dem Ausgang des einen Kanals in den Ausgang des anderen Kanals gelang und in verkehrter Strömungsrichtung durch den für diese Phase nicht vorgesehenen Kanal strömt. Da die schwere Phase und die leichte Phase im Wesentlichen abwechselnd gepumpt werden, wobei lediglich nur ein sehr kurzes gleichzeitiges Pumpen und vorzugsweise kein gleichzeitiges Pumpen auftritt, steht die aktuell nicht gepumpte Phase in ihrem Kanal und kann vergleichbar zu einem Stopfen oder Pfropfen eine Strömung der anderen Phase in diesen Kanal hinein verhindern. Da die aktuell nicht gepumpte Phase nicht durch ihren Kanal strömt, kann sich im Wesentlichen keine hinreichende Turbulenz am oder im Kanal einstellen, die eine Rückströmung der anderen Phase in verkehrter Strömungsrichtung ermöglichen könnte. Je nach Druckverhältnissen ist es allenfalls möglich, dass die andere Phase insbesondere im Wesentlichen pfropfenförmig in den falschen Kanal hineingelangt, wobei jedoch die Zykluszeit so klein ist, dass die für diesen Kanal nicht vorgesehene Phase den Kanal nicht vollständig bis zur nächsten Kammer entgegen der vorgesehenen Strömungsrichtung durchströmen kann. Dadurch wird vermieden, dass sich mit fortschreitender Zeit die eine Kammer immer weiter mit der leichten Phase und die andere Kammer immer weiter mit der schweren Phase füllt und dadurch die Trennleistung sinkt. Durch den im Wesentlichen alternierenden kurzzeitigen Pumpbetrieb des ersten Kanals und des zweiten Kanals kann für den Extraktor ein Gegenstromprinzip erreicht werden ohne eine Rückströmung der Phasen entgegen der beabsichtigten Strömungsrichtung in den jeweiligen Kanälen zu riskieren, wodurch eine gute Trennleistung bei der Zentrifugalextraktion ermöglicht ist.

Die Bezeichnung "erste Kammer" und "zweiter Kammer" wird im Wesentlichen als Bezeichnung verstanden, um zwei in Strömungsrichtung nachfolgende Kammern voneinander unterscheiden zu können. Wenn ein nachfolgendes Paar Kammer der Kammerkaskade betrachtet wird, kann die erste Kammer des vorherigen Kammerpaars die zweite Kammer des nachfolgenden Kammerpaars beziehungsweise die zweite Kammer des vorherigen Kammerpaars die erste Kammer des nachfolgenden Kammerpaars sein. Vorzugsweise sind sämtliche Kammern der Kammerkaskade derart miteinander verbunden, dass zwei nachfolgende Kammern immer sowohl über den ersten Kanal als auch über den zweiten Kanal miteinander verbunden sind. Dadurch kann ein reiner Gegenstrom der schweren Phase und der leichten Phase erreicht werden, wobei Rückströmungen und/oder ein zwischenzeitlicher Gleichstrom der schweren Phase und der leichten Phase vermieden werden können. Im regulären Betrieb des Extraktors ist die Kammerkaskade einem Zentrifugalfeld ausgesetzt, während die schwere Phase und/oder die leichte Phase als mobile Phase durch die Kammerkaskade gepumpt werden soll, um die Komponenten einer der Kammerkaskade zugegebenen Probe separieren zu können.

Die leichte Phase und die schwere Phase sind insbesondere ineinander schwer löslich und/oder bilden eine Mischungslücke aus. Beispielsweise kann als schwere Phase eine wasserreiche Phase und als leichte Phase eine ethylacetatreiche Phase verwendet werden. Insbesondere ist die eine Phase eine wässrige Phase während die andere Phase eine lipophile Phase ist. Es können auch wässrige Zweiphasensysteme ("ATPS", engl.: aqueous two phase systemes) verwendet werden, wobei beide Phasen zu einem Großteil aus Wasser bestehen. Beispielsweise ist in der leichten Phase ein Wasser kompatibles Polymer und in der anderen Phase ein zweites Wasser kompatibles Polymer und/ oder ein Wasser lösliches Salz angereichert. Diese wässrigen Zweiphasensysteme eignen sich besonders für die Auftrennung von biotechnologischen Komponenten (z.B. Antikörper/ Proteine). Man bezeichnet diese Systeme als Wässrige Zweiphasensysteme. Bei der schweren Phase handelt es sich um diejenige Phase, die unter Fliehkrafteinfluss sich bezogen auf die Drehachse radial außen zur leichten Phase ansammeln würde. Die schwere Phase und/oder die leichte Phase können insbesondere flüssig sein, wobei es auch möglich ist, dass die leichte Phase oder sowohl die leichte Phase als auch die schwere Phase gasförmig ist. Die Kammern der Kammerkaskade sind insbesondere auf einem gemeinsamen Radius zu der Drehachse des Extraktors angeordnet, so dass sich in den Kammern der Kammerkaskade im Wesentlichen die gleichen Fliehkraftverhältnisse einstellen, wenn die Kammerkaskade dem Zentrifugalfeld ausgesetzt wird. Die Kammern der Kammerkaskade sind beispielsweise in einer rotierbaren Scheibe des Extraktors vorgesehen, die um eine Drehachse rotiert werden kann, um die Kammerkaskade dem Zentrifugalfeld auszusetzen.

Die Kammerkaskade kann an einem ersten Ende einen ersten Eingang für die schwere Phase und einen zweiten Ausgang für die leichte Phase aufweisen und an einem zweiten Ende einen zweiten Eingang für die leichte Phase und einen ersten Ausgang für die schwere Phase aufweisen. Vorzugsweise erstreckt sich die Kammerkaskade über nahezu den gesamten Umfang, so dass der Eingang und der Ausgang der schweren Phase und/oder der leichten Phase in unmittelbarer Nähe benachbart zueinander vorgesehen sein können. Zusätzlich oder alternativ können mindestens zwei oder mehr Scheiben axial übereinander angeordnet sein, wobei die Kammerkaskaden der jeweiligen Scheibe in Reihe geschaltet sein können, um die Gesamtanzahl der Kammern und damit die Trennleistung zu erhöhen. Die erste Pumpeinrichtung ist insbesondere mit dem ersten Eingang für die schwere Phase verbunden, während die zweite Pumpeinrichtung mit dem zweiten Eingang für die leichte Phase verbunden sein kann. Die jeweilige Pumpeinrichtung kann ein Bypass-Ventil aufweisen, das für die jeweilige Zykluszeit die Pumpeinrichtung mit dem zugeordneten Eingang verbindet und in einer Betriebssituation, wenn die entsprechende Phase nicht gepumpt werden soll, die von der Pumpeinrichtung geförderte Phase über einen Bypass-Kanal im Kreis zurück in ein entsprechendes Reservoir leitet. Dadurch, dass nicht die Pumpeinrichtung ein- und ausgeschaltet werden muss, sondern lediglich ein Ventil umgestellt wird, können besonders kurze Zykluszeiten erreicht werden. Vorzugsweise werden lediglich die Ventile von der Steuereinrichtung betätigt, um für die entsprechenden Pumpeinrichtungen einen Pumpbetrieb mit der gewünschten Zykluszeit vorzusehen. Für den Betrieb der Pumpeinrichtungen ist damit ausreichend lediglich die Ventile mit Hilfe der Steuereinrichtung zu betätigen. Ferner kann jeweils der Ausgang der im Zyklus nicht gepumpten Phase abgesperrt werden. Dies verhindert, dass die gepumpte Phase direkt aus der für die jeweilige Phase erste Kammer durch den für die andere Phase vorgesehenen Ausgang austritt. Dadurch wird verhindert, dass die gepumpte Phase nur die erste Kammer durchströmt und durch den Ausgang der anderen Phase wieder diese Kammer verlässt. Stattdessen ist sichergestellt, dass die gepumpte Phase die Kammerkaskade vollständig durchströmt.

Eine Probe (Eluentengemisch), die unterschiedlich gut in der schweren Phase und der leichten Phase lösliche Komponenten aufweist, kann an einer geeigneten Stelle der Kammerkaskade zugegeben werden. Hierzu kann insbesondere genau eine Kammer der Kammerkaskade ausgewählt werden. Vorzugsweise wird insbesondere bei einer Probe, die aus genau zwei Komponenten besteht, eine Kammer der Kammerkaskade ausgewählt, bei der unter Berücksichtigung der Löslichkeiten der Komponenten und der sich dadurch ergebenden Transportgeschwindigkeit der Komponente durch die Kammerkaskade im Wesentlichen gleiche Verweilzeiten (Retentionszeiten) innerhalb der Kammerkaskade ergeben, wobei die eine Komponente mit der schweren Phase in die eine Umfangsrichtung und die andere Komponente mit der leichten Phase in der entgegen gesetzten Umfangsrichtung durch die Kammerkaskade transportiert wird. Dadurch treten die Komponenten der zu einem bestimmten Zeitpunkt eingespritzten Probe im Wesentlichen gleichzeitig aus der Kammerkaskade aus. Dies ermöglicht eine hohe Trennschärfe (Selektivität). Zusätzlich oder alternativ kann die Probe beispielsweise einer Kammer zugegeben werden, die mittig in der Kammerkaskade angeordnet ist, wobei die Verweilzeiten der Komponenten der Probe durch unterschiedlich lange Zykluszeiten für das Pumpen der schweren Phase und das Pumpen der leichten Phase und/oder unterschiedlich große Volumenströme in den unterschiedlichen Zykluszeiten beeinflusst werden kann. Insbesondere falls die Probe mit Hilfe des Extraktors in ihre Komponenten aufgetrennt werden soll, kann die Probe auch kontinuierlich oder quasikontinuierlich zugegeben werden. Das heißt, es kann eine weitere Probe zugegeben werden, bevor die bereits der Kammerkaskade zugeführten Komponenten der Probe die Kammerkaskade verlassen haben, wobei vorzugsweise die Probe kontinuierlich zugeleitet werden kann.

Vorzugsweise ist der erste Kanal radial außen mit der ersten Kammer zur Abfuhr der schweren Phase aus der ersten Kammer und radial innen mit der zweiten Kammer zur Zufuhr der schweren Phase in die zweite Kammer verbunden. Insbesondere ist der zweite Kanal radial innen mit der zweiten Kammer zur Abfuhr der leichten Phase aus der zweiten Kammer und radial außen mit der ersten Kammer zur Zufuhr der leichten Phase in die erste Kammer verbundenen. Dies ermöglicht es, dass die schwere Phase und die leichte Phase bei einem Übergang von der einen Kammer in die andere Kammer die jeweilige Kammer in radialer Richtung im Wesentlichen vollständig durchströmen müssen. Dies führt zu einer guten Durchmischung der Phasen bei ihrem Weg von dem einen radialen Ende der Kammer zu dem gegenüberliegenden radialen Ende der Kammer. Es ergibt sich eine vergleichbar große Oberfläche zwischen der schweren Phase und der leichten Phase, die einen Übergang der in den jeweiligen Phasen gelösten Komponenten der Probe zwischen den Phasen erleichtert und die Trennleistung erhöht.

Insbesondere ist die erste Zykluszeit t₁ kleiner als eine Durchflusszeit t_{D1} der schweren Phase durch den ersten Kanal ist, wobei insbesondere 0,001 ≤ t₁/t_{D1} < 1,0, vorzugsweise 0,005 ≤ t₁/t_{D1} < 0,5, weiter bevorzugt 0,01 ≤ t₁/t_{D1} < 0,2 und besonders bevorzugt 0,05 ≤ t₁/t_{D1} < 0,1 gilt, und/oder die zweite Zykluszeit t₂ ist kleiner als eine Durchflusszeit t_{D2} der leichten Phase durch den zweiten Kanal, wobei insbesondere 0,001 ≤ t₂/t_{D2} < 1,0, vorzugsweise 0,005 ≤ t₂/t_{D2} < 0,5, weiter bevorzugt 0,01 ≤ t₂/t_{D2} < 0,2 und besonders bevorzugt 0,05 ≤ t₂/t_{D2} < 0,1 gilt. Phase, die während einer Zykluszeit in den ihr zugeordneten Kanal gepumpt wird, erreicht dadurch die nachfolgende Kammer nicht während der gleichen Zykluszeit, sondern erst in einer nachfolgenden Zykluszeit. Ein vollständiges Durchströmen des jeweiligen Kanals während einer Zykluszeit ist dadurch vermieden. Die gepumpte Phase wird dadurch bei dem Übergang von der einen Kammer in die andere Kammer in dem Kanal zumindest einmal abgebremst und kann dadurch als Pfropfen für die jeweils andere Phase wirken, um eine unbeabsichtigte Gegenströmung der anderen Phase entgegen der vorgesehenen Strömungsrichtung des Kanals zu verhindern. Die Ausbildung von turbulenzbedingten sich über die gesamte Länge des Kanals ausbildende Rückströmungen, welche die jeweils andere Phase entgegen der beabsichtigten Strömungsrichtung mitreißen könnten, wird dadurch vermieden.

Vorzugsweise gilt 0,01 s ≤ t₁ ≤ 10,0 s, insbesondere 0,1 s ≤ t₁ ≤ 5,0 s, vorzugsweise 0,5 s ≤ t₁ ≤ 2,0 s und besonders bevorzugt 1,0 s ≤ t₁ ≤ 1,5 s und/oder 0,01 s ≤ t₂ ≤ 10,0 s, insbesondere 0,1 s ≤ t₂ ≤ 5,0 s, vorzugsweise 0,5 s ≤ t₂ ≤ 2,0 s und besonders bevorzugt 1,0 s ≤ t₂ ≤ 1,5 s. Die Zykluszeit ist dadurch kurz genug, dass sich keine Kurzschluss-Strömungen oder Rückströmungen ergeben. Ferner ergibt sich dadurch ein im Wesentlichen kontinuierlicher Gegenstrombetrieb.

Besonders bevorzugt gilt 0,1 ≤ t₁/t₂ < 1,0, insbesondere 0,2 ≤ t₁/t₂ ≤ 0,9, vorzugsweise 0,3 ≤ t₁/t₂ ≤ 0,7 und besonders bevorzugt 0,4 ≤ t₁/t₂ ≤ 0,5 oder 0,1 ≤ t₂/t₁ < 1,0, insbesondere 0,2 ≤ t₂/t₁ ≤ 0,9, vorzugsweise 0,3 ≤ t₂/t₁ ≤ 0,7 und besonders bevorzugt 0,4 ≤ t₂/t₁ ≤ 0,5. Zusätzlich oder alternativ ist die erste Pumpeinrichtung derart eingestellt, dass die erste Phase mit einem Volumenstrom V₁ gepumpt wird, und die zweite Pumpeinrichtung ist derart eingestellt, dass die zweite Phase mit einem Volumenstrom V₂ gepumpt wird, wobei 0,1 ≤ t₁V₁/t₂V₂ < 1,0, insbesondere 0,2 ≤ t₁V₁/t₂V₂ ≤ 0,9, vorzugsweise 0,3 ≤ t₁V₁/t₂V₂ ≤ 0,7 und besonders bevorzugt 0,4 ≤ t₁V₁/t₂V₂ ≤ 0,5 oder 0,1 ≤ t₂V₂/t₁V₁ < 1,0, insbesondere 0,2 ≤ t₂V₂/t₁V₁ ≤ 0,9, vorzugsweise 0,3 ≤ t₂V₂/t₁V₁ ≤ 0,7 und besonders bevorzugt 0,4 ≤ t₂V₂/t₁V₁ ≤ 0,5 gilt. Die Zykluszeiten für die leichte Phase und für die schwere Phase können dadurch, insbesondere unter Berücksichtigung der für die unterschiedlichen Phasen vorgesehenen Volumenströme, derart voneinander abweichen, dass die Verweilzeiten für die bevorzugt in der schweren Phase lösliche Komponente und bevorzugt in der leichten Phase lösliche Komponente innerhalb der Kammerkaskade angeglichen werden können.

Insbesondere weist das erste Ventil ein im Wesentlichen quer zur Radialrichtung bewegbares erstes Schließelement, insbesondere Rückschlagkugel, zum Öffnen und/oder Schließen des ersten Kanals auf und/oder das zweite Ventil weist ein im Wesentlichen quer zur Radialrichtung bewegbares zweites Schließelement, insbesondere Rückschlagkugel, zum Öffnen und/oder Schließen des zweiten Kanals auf. Das insbesondere als Rückschlagventil ausgestaltete Ventil weist insbesondere eine quer zur Zentrifugalrichtung (Radialrichtung) ausgerichtete Betätigungsrichtung auf, so dass das Öffnen und Schließen des Rückschlagventils im Wesentlichen unabhängig von dem aufgeprägten Zentrifugalfeld ist. Die Betätigungsrichtung des Rückschlagventils kann in tangentialer Richtung, in Umfangsrichtung und/oder in axialer Richtung ausgerichtet sein. Vorzugsweise ist als Schließelement eine Rückschlagkugel vorgesehen, die mit oder ohne Federelement in dem jeweiligen Kanal vorgesehen ist. Die Betätigungskugel kann im Pumpbetrieb durch den anliegenden Druck in eine Position gedrückt werden, in welcher der Kanal geöffnet ist, und bei der Unterbrechung des Pumpbetriebs von dem anliegenden Gegendruck der nachfolgenden Kammer in eine Position gedrückt werden, in welcher der Kanal geschlossen ist. Zusätzlich oder alternativ kann die Betätigungsrichtung des Ventils einen Anteil in Zentrifugalrichtung aufweisen, der derart bemessen ist, dass das insbesondere als Rückschlagkugel ausgestaltete Schließelement unter den zu erwartenden Betriebsbedingungen infolge der an dem Schließelement angreifenden Fliehkraft in eine beabsichtigte Neutralstellung, insbesondere eine geschlossene Stellung, bewegt wird, wenn die zugeordnete Pumpeinrichtung keinen Förderdruck in den jeweiligen Kanal aufprägt. Das Ventil kann dadurch auch ohne an dem Schließelement angreifendem Federelement im regulären Betrieb eine definierte Neutralstellung einnehmen. Alternativ kann das Schließelement im Wesentlichen rechtwinkelig zur Drehachse des Extraktors in Radialrichtung bewegbar sein, wobei insbesondere das Schließelement durch die angreifende Fliehkraft automatisch in eine geschlossene Stellung bewegbar ist und die zugeordnete Pumpeinrichtung entgegen der angreifenden Fliehkraft das Schließelement in eine geöffnete Stellung drücken kann.

Ein Aspekt der Erfindung betrifft ein Verfahren zur Durchführung einer Zentrifugalextraktion, insbesondere zur Separation und/oder Extraktion und/oder Chromatographie einer Probe, mit den Schritten Rotieren eines Extraktors, der insbesondere wie vorstehend beschrieben aus- und weitergebildet sein kann, mit einer eine schwere Phase und eine leichte Phase aufweisenden Kammerkaskade, wobei die Kammerkaskade eine mit einer ersten Kammer und einer zweiten Kammer verbundenen ersten Kanal zur Abfuhr der schweren Phase aus der ersten Kammer und zur Zufuhr der schweren Phase in die zweite Kammer und einen mit der zweiten Kammer und der ersten Kammer verbundenen zweiten Kanal zur Abfuhr der leichten Phase aus der zweiten Kammer und zur Zufuhr der leichten Phase in die erste Kammer aufweist, wobei der erste Kanal ein erstes Ventil zu Sperrung einer Rückströmung von der zweiten Kammer in die erste Kammer und/oder der zweite Kanal ein zweites Ventil zu Sperrung einer Rückströmung von der ersten Kammer in die zweite Kammer aufweist, Zuführen einer Probe in die Kammerkaskade, wobei die Probe unterschiedlich gut in der schweren Phase und der leichten Phase lösliche Komponenten aufweist, und Pumpen der schweren Phase in eine erste Umfangsrichtung sowie Pumpen der leichten Phase in einer der ersten Umfangsrichtung entgegen gesetzten zweiten Umfangsrichtung, wobei mit Hilfe des ersten Ventils und/oder des zweiten Ventils eine Strömung nur entlang der beabsichtigten Strömungsrichtung erfolgt und ein vollständiger Durchfluss des ersten Kanals im Wesentlichen nur durch die schwere Phase und ein vollständiger Durchfluss des zweiten Kanals im Wesentlichen nur durch die leichte Phase durchgeführt wird.

Dadurch kann für den Extraktor ein Gegenstromprinzip erreicht werden ohne eine Rückströmung der Phasen entgegen der beabsichtigten Strömungsrichtung in den jeweiligen Kanälen zu riskieren, wodurch eine gute Trennleistung bei der Zentrifugalextraktion ermöglicht ist. Das Verfahren kann insbesondere wie vorstehend anhand des Extraktors beschrieben aus- und weitergebildet werden.

Insbesondere wird abwechselnd entweder die schwere Phase über eine erste Zykluszeit t₁ oder die leichte Phase über eine zweite Zykluszeit t₂ gepumpt, wobei die erste Zykluszeit t₁ kleiner als eine Durchflusszeit t_{D1} der schweren Phase durch den ersten Kanal ist, wobei insbesondere 0,001 ≤ t₁/t_{D1} < 1,0, vorzugsweise 0,005 ≤ t₁/t_{D1} < 0,5, weiter bevorzugt 0,01 ≤ t₁/t_{D1} < 0,2 und besonders bevorzugt 0,05 ≤ t₁/t_{D1} < 0,1 gilt, und/oder die zweite Zykluszeit t₂ kleiner als eine Durchflusszeit t_{D2} der leichten Phase durch den zweiten Kanal ist, wobei insbesondere 0,001 ≤ t₂/t_{D2} < 1,0, vorzugsweise 0,005 ≤ t₂/t_{D2} < 0,5, weiter bevorzugt 0,01 ≤ t₂/t_{D2} < 0,2 und besonders bevorzugt 0,05 ≤ t₂/t_{D2} < 0,1 gilt. Phase, die während einer Zykluszeit in den ihr zugeordneten Kanal gepumpt wird, erreicht dadurch die nachfolgende Kammer nicht während der gleichen Zykluszeit, sondern erst in einer nachfolgenden Zykluszeit. Ein vollständiges Durchströmen des jeweiligen Kanals während einer Zykluszeit ist dadurch vermieden. Die gepumpte Phase wird dadurch bei dem Übergang von der einen Kammer in die andere Kammer in dem Kanal zumindest einmal abgebremst und kann dadurch als Pfropfen für die jeweils andere Phase wirken, um eine unbeabsichtigte Gegenströmung der anderen Phase entgegen der vorgesehenen Strömungsrichtung des Kanals zu verhindern. Die Ausbildung von turbulenzbedingten sich über die gesamte Länge des Kanals ausbildende Rückströmungen, welche die jeweils andere Phase entgegen der beabsichtigten Strömungsrichtung mitreißen könnten, wird dadurch vermieden.

Vorzugsweise wird während des Pumpens der schweren Phase der zweite Kanal und/oder während des Pumpens der leichten Phase der erste Kanal versperrt. Dadurch kann sichergestellt werden, dass eine Strömung in dem ersten Kanal und dem zweiten Kanal nur entlang der beabsichtigten Strömungsrichtung erfolgt. Kurzschluss-Strömungen oder Rückströmungen können dadurch sicher vermieden werden. Ferner ist es möglich auch längere Zykluszeiten t₁ und t₂ zuzulassen, ohne eine verschlechterte Trennleistung durch unerwünschte Strömungseffekte zu riskieren.

Im regulären Betrieb kann der Extraktor insbesondere mit einer Drehzahl n von 500 U/min ≤ n ≤ 2500 U/min, vorzugsweise 700 U/min ≤ n ≤ 2000 U/min und besonders bevorzugt 1000 U/min ≤ n ≤ 2000 U/min betrieben werden. Vorzugsweise erstreckt sich die Kammerkaskade entlang eines mittleren Radius von der Drehachse des Extraktors von ca. 97 mm, so dass sich bei einer Drehzahl von n = 1000 U/min ein Zentrifugalfeld von ca. 1064 m/s² ergeben kann. Bei einer Anordnung der Kammerkaskade auf einem größeren beziehungsweise kleineren mittleren Radius kann die Drehzahl entsprechend reduziert beziehungsweise erhöht werden, um ein vergleichbar starkes geeignetes Zentrifugalfeld bereitzustellen. Der Volumenstrom q₁ für die schwere Phase beim Transport durch die Kammerkaskade beträgt insbesondere 3 ml/min ≤ q₁ ≤ 200 ml/min, vorzugsweise 5 ml/min ≤ q₁ ≤ 100 ml/min und besonders bevorzugt 10 ml/min ≤ q₁ ≤ 50 ml/min. Der Volumenstrom q₂ für die leichte Phase beim Transport durch die Kammerkaskade beträgt insbesondere 3 ml/min ≤ q₂ ≤ 200 ml/min, vorzugsweise 5 ml/min ≤ q₂ ≤ 100 ml/min und besonders bevorzugt 10 ml/min ≤ q₂ ≤ 50 ml/min. Die vorstehenden Volumenströme werden insbesondere gewählt, wenn das Gesamtvolumen der Kammerkaskade eines einzelnen Rotors ca. 11 beträgt. Bei einem entsprechend größeren oder kleineren Gesamtvolumen der Kammerkaskade des einzelnen Rotors können die Volumenströme insbesondere proportional angepasst werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Prinzipdarstellung eines Extraktors,
Fig. 2: eine schematische perspektivische Explosionsdarstellung eines Extraktors,
Fig. 3: eine schematische perspektivische Detailansicht des Extraktors aus Fig. 2,
Fig. 4: eine schematische Detailansicht der in Fig. 3 dargestellten Kammerkaskade,
Fig. 5: eine schematische Detailansicht des in Fig. 4 dargestellten Kanals in einer geschlossenen Stellung,
Fig. 6: eine schematische Detailansicht des in Fig. 4 dargestellten Kanals in einer geöffneten Stellung,
Fig. 7: eine schematische Schnittansicht einer ersten Alternative eines Ventils für einen Kanal einer Kammerkaskade,
Fig. 8: eine schematische perspektivische vereinfachte Ansicht des in Fig. 7 dargestellten Ventils und
Fig. 9: eine schematische Schnittansicht einer zweiten Alternative eines Ventils für einen Kanal einer Kammerkaskade.

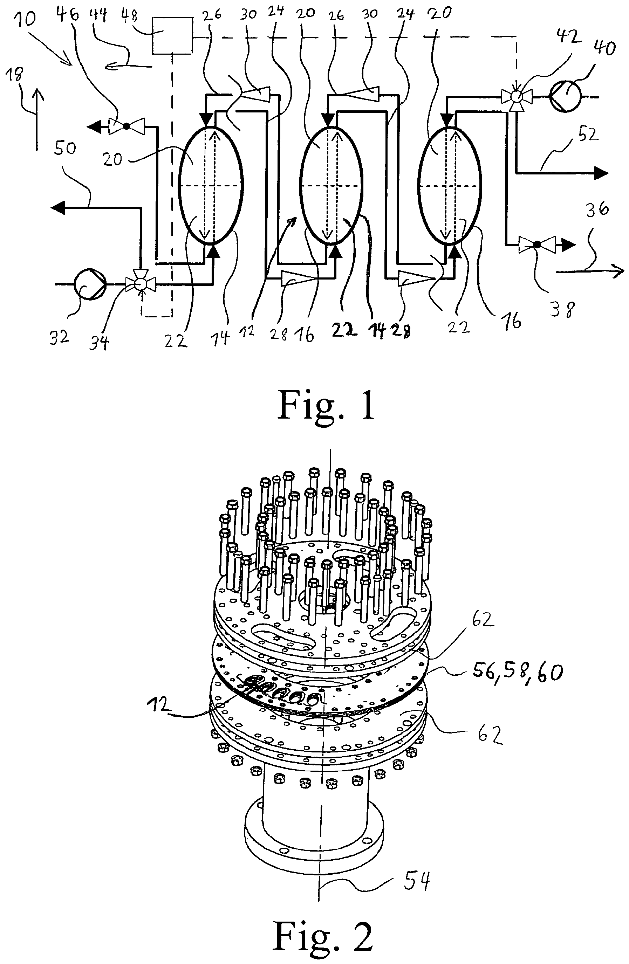

Der in Fig. 1 dargestellte Extraktor 10 weist eine in abgewickelter Darstellung gezeigte Kammerkaskade 12 auf, bei der in Strömungsrichtung nachfolgende Kammern als erste Kammer 14 und zweite Kammer 16 bezeichnet werden, wobei im dargestellten Ausführungsbeispiel die zweite Kammer 16 für das linke Kammerpaar gleichzeitig die erste Kammer 14 für das rechte Kammerpaar ist. Die Kammerkaskade 12 kann von dem Extraktor 10 in Rotation versetzt werden, so dass die Kammerkaskade 12 einem Zentrifugalfeld mit einer nach radial außen gerichteten Fliehkraft 18 ausgesetzt wird. Innerhalb der Kammern 14, 16 ist eine schwere Phase 20 und eine leichte Phase 22 vorgesehen, wobei sich die schwere Phase 20 unter Fliehkrafteinfluss radial außen absetzt, während sich die leichte Phase 22 unter Fliehkrafteinfluss radial innen absetzt. Über einen radial außen mit der ersten Kammer 14 verbundenen ersten Kanal 24 kann die schwere Phase 20 abgezogen werden und radial innen der zweiten Kammer 16 zugeführt werden. Die schwere Phase 20 kann dann unter Fliehkrafteinfluss in der zweiten Kammer 16 die leichte Phase 22 durchströmen und sich radial außen absetzen, wo die schwere Phase 20 erneut über einen ersten Kanal 24 der nächsten zweiten Kammer 16 zugeführt werden kann. Über einen radial innen mit der zweiten Kammer 16 verbundenen zweiten Kanal 26 kann die leichte Phase 22 abgezogen werden und radial außen der ersten Kammer 14 zugeführt werden. Die leichte Phase 22 kann dann unter Fliehkrafteinfluss in der ersten Kammer 14 die schwere Phase 20 durchströmen und sich radial innen absetzen, wo die leichte Phase 22 erneut über einen zweiten Kanal 26 der nächsten ersten Kammer 14 zugeführt werden kann. Der erste Kanal 24 kann ein als Rückschlagventil ausgestaltetes erstes Ventil 28 aufweisen, um eine Gegenströmung der leichten Phase 22 durch den ersten Kanal 24 entgegen der beabsichtigten Strömungsrichtung zu vermeiden. Entsprechend kann der zweite Kanal 26 ein als Rückschlagventil ausgestaltetes zweites Ventil 30 aufweisen, um eine Gegenströmung der schweren Phase 20 durch den zweiten Kanal 26 entgegen der beabsichtigten Strömungsrichtung zu vermeiden.

An einem ersten Ende der Kammerkaskade 12 ist eine erste Pumpeinrichtung 32 vorgesehen, die über ein erstes Bypassventil 34 die schwere Phase 20 entlang einer ersten Umfangsrichtung 36 durch die Kammerkaskade 12 bis zu einem ersten Ausgang 38 pumpen kann. Entsprechend ist an einem zweiten Ende der der Kammerkaskade 12 eine zweite Pumpeinrichtung 40 vorgesehen, die über ein zweites Bypassventil 42 die leichte Phase 22 entlang einer der ersten Umfangsrichtung 36 entgegen gesetzten zweiten Umfangsrichtung 44 durch die Kammerkaskade 12 bis zu einem zweiten Ausgang 46 pumpen kann. Das erste Bypassventil 34 und das zweite Bypassventil 42 sind mit einer Steuereinrichtung 48 verbunden, welche die Öffnungszeiten und Schließzeiten der Bypassventile 34, 42 steuert. Die Steuereinrichtung 48 kann das erste Bypassventil 34 über eine Zykluszeit t₁ öffnen und dadurch die erste Pumpenrichtung 32 über die Zykluszeit t₁ zum Pumpen der schweren Phase

20 durch die Kammerkaskade 12 betreiben, wobei vorzugsweise von der Steuereinrichtung 48 gleichzeitig der zweite Ausgang 46 versperrt wird. Entsprechend kann die Steuereinrichtung 48 das zweite Bypassventil 42 über eine Zykluszeit t₂ öffnen und dadurch die zweite Pumpenrichtung 40 über die Zykluszeit t₂ zum Pumpen der leichten Phase 22 durch die Kammerkaskade 12 betreiben, wobei vorzugsweise von der Steuereinrichtung 48 gleichzeitig der erste Ausgang 38 versperrt wird. Insbesondere kann die Steuereinrichtung 48 die Volumenströme der ersten Pumpeinrichtung 32 und/oder von der zweiten Pumpeinrichtung 40 steuern. Vorzugsweise ist mit Hilfe der Steuereinrichtung 48 entweder das erste Bypassventil 34 oder das zweite Bypassventil 42 geöffnet, so dass nicht beide Bypassventile 34, 42 gleichzeitig geöffnet oder geschlossen sind. Eine Gegenströmung der schweren Phase 20 durch den zweiten Kanal 26 entgegen der beabsichtigten Strömungsrichtung und/oder eine Gegenströmung der leichten Phase 22 durch den ersten Kanal 24 entgegen der beabsichtigten Strömungsrichtung kann dadurch vermieden werden. Wenn die Steuereinrichtung 48 das erste Bypassventil 34 schließt, kann die von der ersten Pumpeinrichtung 32 gepumpte schwere Phase 20 über einen ersten Bypasskanal 50 in ein erstes Reservoir, aus dem die erste Pumpeinrichtung 32 die schwere Phase 20 herauspumpt, rückgeführt werden. Wenn die Steuereinrichtung 48 das zweite Bypassventil 42 schließt, kann die von der zweiten Pumpeinrichtung 42 gepumpte leichte Phase 22 über einen zweiten Bypasskanal 52 in ein zweites Reservoir, aus dem die zweite Pumpeinrichtung 40 die leichte Phase 22 herauspumpt, rückgeführt werden.

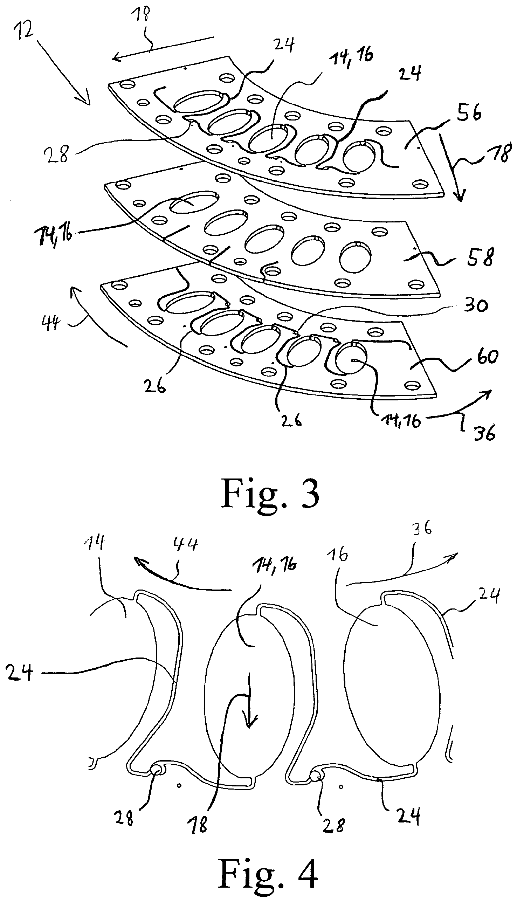

Der in Fig. 2 dargestellte Extraktor 10 ist um eine Drehachse 54 rotierbar, so dass die Kammerkaskade 12 einem Zentrifugalfeld ausgesetzt werden kann. Wie insbesondere in Fig. 3 dargestellt kann die dreidimensionale Ausgestaltung der Kammerkaskade 12 durch mehrere in axialer Richtung übereinander angeordnete Scheiben 56, 58, 60, 62 ausgebildet werden. Hierbei ist es insbesondere möglich beispielsweise den ersten Kanal 24 durch eine obere Scheibe 56 auszubilden, die über eine mittlere Scheibe 58 zu einer unteren Scheibe 60 beabstandet ist, wobei der zweite Kanal 26 durch die untere Scheibe 60 ausgebildet ist. Die Kammern 14, 16 können durch die obere Scheibe 56, die mittlere Scheibe 58 und die untere Scheibe 60 ausgebildet sein und in axialer Richtung durch Deckscheiben 62 begrenzt sein. Der erste Kanal 24 und der zweite Kanal 26 können in axialer Richtung durch die mittlere Scheibe 58 und die zugeordnete Deckscheibe 62 begrenzt sein.

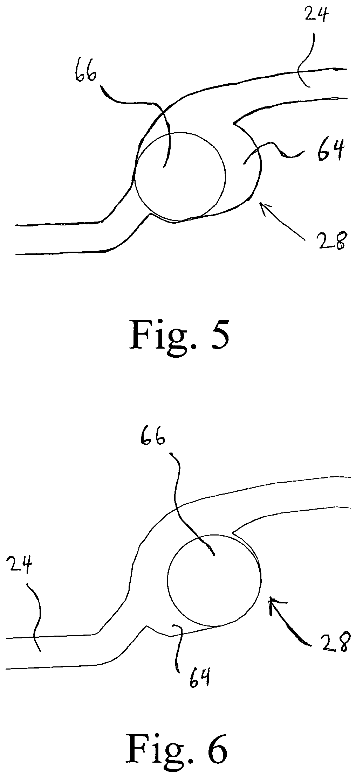

Wie in Fig. 4 exemplarisch anhand des ersten Kanals 24 dargestellt ist, kann der erste Kanal 24 zwischen der ersten Kammer 14 und der zweiten Kammer 16 das erste Ventil 28 aufweisen. Wie in Fig. 5 und Fig. 6 dargestellt, kann das erste Ventil 28 als Rückschlagventil ausgestaltet sein, indem der erste Kanal 24 eine von dem ersten Kanal 24 seitlich abstehende erste Tasche 64 aufweist, in der eine erste Rückschlagkugel 66 bewegbar aufgenommen sein kann. Die Rückschlagkugel 66 muss nicht zwangsläufig kugelförmig ausgestaltet sein, sondern kann durch ein anders geformtes Schließelement, beispielsweise ein Rückschlagzylinder, ersetzt sein. In der in Fig. 5 dargestellten geschlossenen Stellung kann der in dem ersten Kanal 24 anliegende Gegendruck der zweiten Kammer 16 die erste Rückschlagkugel 66 derart innerhalb der ersten Tasche 64 bewegen, dass der erste Kanal 24 versperrt wird. Im Pumpbetrieb ist der in der ersten Kammer 14 vorherrschende Druck so groß, dass die Schwere Phase 20 die erste Rückschlagkugel 66 in die in Fig. 6 dargestellte geöffnete Position drückt und dadurch den ersten Kanal 24 öffnet. Hierzu ist es insbesondere nicht erforderlich die erste Rückschlagkugel 66 mit Hilfe eines Federelements mit einer Federkraft vorzuspannen. Die von der ersten Pumpeinrichtung 32 und der zweiten Pumpeinrichtung 40 aufgebauten Drucke können zum Öffnen und Schließen des ersten Ventils 28 ausreichen. Das zweite Ventil 30 des zweiten Kanals 26 kann entsprechend ausgestaltet sein.

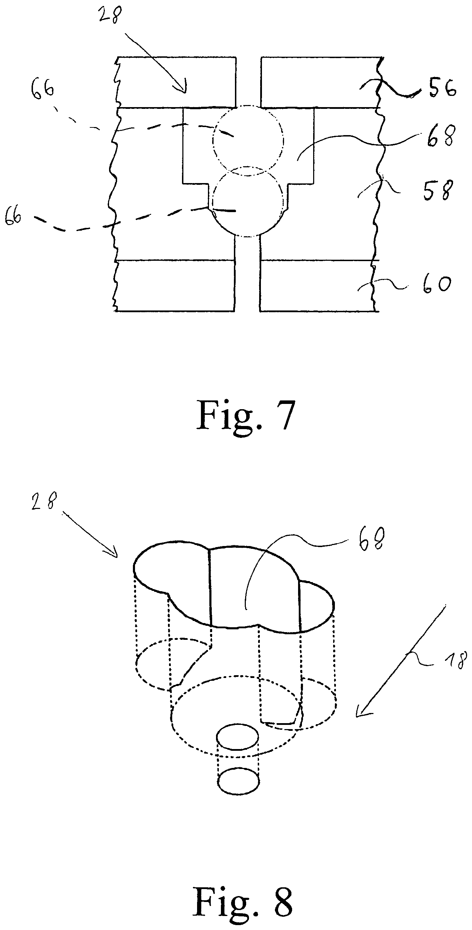

Bei dem in Fig. 7 und Fig. 8 dargestellten Ventil 28 ist das Ventil 28 im Wesentlichen vollständig in der mittleren Scheibe 58 ausgebildet. Das Schließelement 66 ist vollständig in einer ausschließlich in der mittleren Scheibe 58 ausgebildeten Ventilkammer 68 vorgesehen. In der oberen Scheibe 56 und der unteren Scheibe 60 sind keine beweglichen Teile vorgesehen. Die obere Scheibe 56 und die unteren Scheibe 60 erfordern dadurch keine dreidimensionale Bearbeitung parallel zur Drehachse 54. Die erforderlichen Volumina zur Ausbildung der Kammern 14, 16 und der Kanäle 24, 26 können einfach aus der obere Scheibe 56 und der unteren Scheibe 60 ausgeschnitten werden. Das Schließelement 66 kann hierbei quer zur Fliehkraftrichtung 18 im Wesentlichen parallel zur Drehachse 54 bewegbar sein, um den ersten Kanal 24 oder den zweiten Kanal 26 zu öffnen beziehungsweise zu schließen.

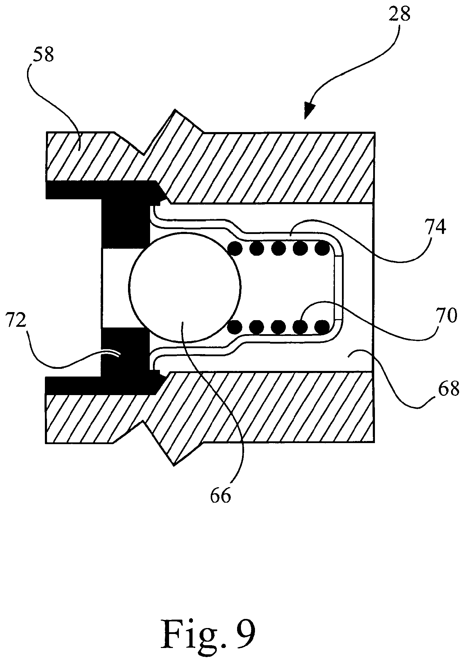

Bei dem in Fig. 9 dargestellten Ventil 28 kann das Schließelement 66 von einer Feder 70 gegen einen Lagersitz 72 gedrückt werden, wobei der Lagersitz 72 innerhalb der vorzugsweise von der mittleren Scheibe 56 ausgebildeten Ventilkammer 68 eingepresst sein kann. Die Feder 70 stützt sich an einem Lagerkäfig 74 ab, der mit dem Lagersitz 72 verbunden sein kann, so dass es zur Ausbildung des Ventils 28 ausreichend ist den Lagersitz 72 insbesondere in die mittlere Scheibe 58 einzupressen. Zum Öffnen des Ventils 28 kann das Schließelement 66 gegen die Federkraft der Feder 70 von dem Lagersitz 72 weggedrückt werden, so dass die schwere Phase 20 beziehungsweise die leichte Phase 22 durch den Lagersitz 72 und den Lagerkäfig 74 hindurchfließen können.

## Patentansprüche

1. Extraktor für eine Zentrifugalverteilungsextraktion, mit
einer in Umfangsrichtung eines designierten Zentrifugalfelds angeordneten Kammerkaskade (12) zur Aufnahme einer schweren Phase (20) und einer leichten Phase (22), wobei die Kammerkaskade (12) mindestens eine erste Kammer (14) und mindestens eine zweite Kammer (16) aufweist,
einer mit der Kammerkaskade (12) verbundenen ersten Pumpeinrichtung (32) zum Pumpen der schweren Phase (20) durch die Kammerkaskade (12) entlang einer ersten Umfangsrichtung (36),
einer mit der Kammerkaskade (12) verbundenen zweiten Pumpeinrichtung (40) zum Pumpen der leichten Phase (22) durch die Kammerkaskade (12) entlang einer der ersten Umfangsrichtung (36) entgegen gesetzten zweiten Umfangsrichtung (44),
einem mit der ersten Kammer (14) und der zweiten Kammer (16) verbundenen ersten Kanal (24) zur Abfuhr der schweren Phase (20) aus der ersten Kammer (14) und zur Zufuhr der schweren Phase (20) in die zweite Kammer (16) und
einem mit der zweiten Kammer (16) und der ersten Kammer (14) verbundenen zweiten Kanal (26) zur Abfuhr der leichten Phase (22) aus der zweiten Kammer (16) und zur Zufuhr der leichten Phase (22) in die erste Kammer (14)
**dadurch gekennzeichnet, dass**
der erste Kanal (24) ein erstes Ventil (28) zur Sperrung einer Rückströmung von der zweiten Kammer (16) in die erste Kammer (14) und/oder der zweite Kanal (26) ein zweites Ventil (30) zur Sperrung einer Rückströmung von der ersten Kammer (14) in die zweite Kammer (16) aufweist und
eine Steuereinrichtung (48) zum Betrieb der ersten Pumpeinrichtung (32) und der zweiten Pumpeinrichtung (40) vorgesehen ist, wobei die Steuereinrichtung (48) derart ausgestaltet ist, dass im regulären Betrieb entweder die erste Pumpeinrichtung (32) mit einer ersten Zykluszeit t₁ oder die zweite Pumpeinrichtung (40) mit einer zweiten Zykluszeit t₂ betrieben wird, wobei mit Hilfe des ersten Ventils (28) und/oder des zweiten Ventils (30) eine Strömung nur entlang der beabsichtigten Strömungsrichtung sichergestellt ist und die erste Zykluszeit t₁ und die zweite Zykluszeit t₂ derart gewählt sind, dass ein vollständiger Durchfluss des ersten Kanals (24) im Wesentlichen nur durch die schwere Phase (20) und ein vollständiger Durchfluss des zweiten Kanals (26) im Wesentlichen nur durch die leichte Phase (22) erfolgt.

2. Extraktor nach Anspruch 1 **dadurch gekennzeichnet, dass** die erste Zykluszeit t₁ kleiner als eine Durchflusszeit t_{D1} der schweren Phase (20) durch den ersten Kanal (24) ist, wobei insbesondere 0,001 ≤ t₁/t_{D1} < 1,0, vorzugsweise 0,005 ≤ t₁/t_{D1} < 0,5, weiter bevorzugt 0,01 ≤ t₁/t_{D1} < 0,2 und besonders bevorzugt 0,05 ≤ t₁/t_{D1} < 0,1 gilt, und/oder die zweite Zykluszeit t₂ kleiner als eine Durchflusszeit t_{D2} der leichten Phase (22) durch den zweiten Kanal (26) ist, wobei insbesondere 0,001 ≤ t₂/t_{D2} < 1,0, vorzugsweise 0,005 ≤ t₂/t_{D2} < 0,5, weiter bevorzugt 0,01 ≤ t₂/t_{D2} < 0,2 und besonders bevorzugt 0,05 ≤ t₂/t_{D2} < 0,1 gilt.

3. Extraktor nach Anspruch 1 oder 2 **dadurch gekennzeichnet, dass** 0,01 s ≤ t₁ ≤ 10,0 s, insbesondere 0,1 s ≤ t₁ ≤ 5,0 s, vorzugsweise 0,5 s ≤ t₁ ≤ 2,0 s und besonders bevorzugt 1,0 s ≤ t₁ ≤ 1,5 s und/oder 0,01 s ≤ t₂ ≤ 10,0 s, insbesondere 0,1 s ≤ t₂ ≤ 5,0 s, vorzugsweise 0,5 s ≤ t₂ ≤ 2,0 s und besonders bevorzugt 1,0 s ≤ t₂ ≤ 1,5 s gilt.

4. Extraktor nach einem der Ansprüche 1 bis 3 **dadurch gekennzeichnet, dass** 0,1 ≤ t₁/t₂ < 1,0, insbesondere 0,2 ≤ t₁/t₂ ≤ 0,9, vorzugsweise 0,3 ≤ t₁/t₂ ≤ 0,7 und besonders bevorzugt 0,4 ≤ t₁/t₂ ≤ 0,5 oder 0,1 ≤ t₂/t₁ < 1,0, insbesondere 0,2 ≤ t₂/t₁ ≤ 0,9, vorzugsweise 0,3 ≤ t₂/t₁ ≤ 0,7 und besonders bevorzugt 0,4 ≤ t₂/t₁ ≤ 0,5 gilt.

5. Extraktor nach einem der Ansprüche 1 bis 4 **dadurch gekennzeichnet, dass** das erste Ventil (28) und/oder das zweite Ventil (30) als Rückschlagventil ausgestaltet ist.

6. Extraktor nach Anspruch 5 **dadurch gekennzeichnet, dass** das erste Ventil (28) ein im Wesentlichen quer zur Radialrichtung bewegbares erstes Schließelement, insbesondere eine Rückschlagkugel (66), zum Öffnen und/oder Schließen des ersten Kanals (24) aufweist und/oder das zweite Ventil (30) ein im Wesentlichen quer zur Radialrichtung bewegbares zweites Schließelement, insbesondere eine Rückschlagkugel, zum Öffnen und/oder Schließen des zweiten Kanals (28) aufweist.

7. Verfahren zur Durchführung einer Zentrifugalextraktion, insbesondere zur Separation und/oder Extraktion und/oder Chromatographie einer Probe, mit den Schritten Rotieren eines Extraktors (10), insbesondere nach einem der Ansprüche 1 bis 6, mit einer eine schwere Phase (20) und eine leichte Phase (22) aufweisenden Kammerkaskade (12), wobei die Kammerkaskade (12) eine mit einer ersten Kammer (14) und einer zweiten Kammer (16) verbundenen ersten Kanal (24) zur Abfuhr der schweren Phase (20) aus der ersten Kammer (14) und zur Zufuhr der schweren Phase (20) in die zweite Kammer (16) und einen mit der zweiten Kammer (16) und der ersten Kammer (14) verbundenen zweiten Kanal (26) zur Abfuhr der leichten Phase (22) aus der zweiten Kammer (16) und zur Zufuhr der leichten Phase (22) in die erste Kammer (14) aufweist, wobei der erste Kanal (24) ein erstes Ventil (28) zur Sperrung einer Rückströmung von der zweiten Kammer (16) in die erste Kammer (14) und/oder der zweite Kanal (26) ein zweites Ventil (30) zur Sperrung einer Rückströmung von der ersten Kammer (14) in die zweite Kammer (16) aufweist,
Zuführen einer Probe in die Kammerkaskade (12), wobei die Probe unterschiedlich gut in der schweren Phase und der leichten Phase lösliche Komponenten aufweist, und
Pumpen der schweren Phase (20) in eine erste Umfangsrichtung (36) sowie Pumpen der leichten Phase (22) in einer der ersten Umfangsrichtung (36) entgegen gesetzten zweiten Umfangsrichtung (44), wobei mit Hilfe des ersten Ventils (28) und/oder des zweiten Ventils (30) eine Strömung nur entlang der beabsichtigten Strömungsrichtung erfolgt und ein vollständiger Durchfluss des ersten Kanals (24) im Wesentlichen nur durch die schwere Phase (20) und ein vollständiger Durchfluss des zweiten Kanals (26) im Wesentlichen nur durch die leichte Phase (22) durchgeführt wird.

8. Verfahren nach Anspruch 7, bei dem abwechselnd entweder die schwere Phase (20) über eine erste Zykluszeit t₁ oder die leichte Phase (22) über eine zweite Zykluszeit t₂ gepumpt wird, wobei die erste Zykluszeit t₁ kleiner als eine Durchflusszeit t_{D1} der schweren Phase (20) durch den ersten Kanal (24) ist, wobei insbesondere 0,001 ≤ t₁/t_{D1} < 1,0, vorzugsweise 0,005 ≤ t₁/t_{D1} < 0,5, weiter bevorzugt 0,01 ≤ t₁/t_{D1} < 0,2 und besonders bevorzugt 0,05 ≤ t₁/t_{D1} < 0,1 gilt, und/oder die zweite Zykluszeit t₂ kleiner als eine Durchflusszeit t_{D2} der leichten Phase (22) durch den zweiten Kanal (26) ist, wobei insbesondere 0,001 ≤ t₂/t_{D2} < 1,0, vorzugsweise 0,005 ≤ t₂/t_{D2} < 0,5, weiter bevorzugt 0,01 ≤ t₂/t_{D2} < 0,2 und besonders bevorzugt 0,05 ≤ t₂/t_{D2} < 0,1 gilt.

9. Verfahren nach Anspruch 8, bei dem während des Pumpens der schweren Phase (20) der zweite Kanal (28) und/oder während des Pumpens der leichten Phase (22) der erste Kanal (24) versperrt wird.

## Claims

1. Extractor for a centrifugal partition extraction, having
a chamber cascade (12), arranged in the circumferential direction of a designated centrifugal field, for receiving a heavy phase (20) and a light phase (22), the chamber cascade (12) having at least a first chamber (14) and at least a second chamber (16),
a first pumping device (32), connected to the chamber cascade (12), for pumping the heavy phase (20) through the chamber cascade (12) along a first circumferential direction (36),
a second pumping device (40), connected to the chamber cascade (12), for pumping the light phase (22) through the chamber cascade (12) along a second circumferential direction (44) opposite to the first circumferential direction (36),
a first channel (24), connected to the first chamber (14) and the second chamber (16), for discharging the heavy phase (20) from the first chamber (14) and for feeding the heavy phase (20) into the second chamber (16) and
a second channel (26), connected to the second chamber (16) and the first chamber (14), for discharging the light phase (22) from the second chamber (16) and for feeding the light phase (22) into the first chamber (14),
**characterized in that**
the first channel (24) has a first valve (28), for preventing a back-flow from the second chamber (16) into the first chamber (14), and/or the second channel (26) has a second valve (30) for preventing a back-flow from the first chamber (14) into the second chamber (16) and
a control device (48) for operating the first pumping device (32) and the second pumping device (40) is provided, the control device (48) being designed such that, in ordinary operation, either the first pumping device (32) is operated with a first cycle time t₁ or the second pumping device (40) is operated with a second cycle time t₂, it being ensured with the aid of the first valve (28) and/or the second valve (30) that there is only a flow along the intended direction of flow, and the first cycle time t₁ and the second cycle time t₂ being selected such that substantially only the heavy phase (20) flows completely through the first channel (24) and substantially only the light phase (22) flows completely through the second channel (26).

2. Extractor according to Claim 1, **characterized in that** the first cycle time t₁ is less than a flow time t_{D1} of the heavy phase (20) through the first channel (24), where in particular 0.001 ≤ t₁/t_{D1} < 1.0, preferably 0.005 ≤ t₁/t_{D1} < 0.5, more preferably 0.01 ≤ t₁/t_{D1} < 0.2 and particularly preferably 0.05 ≤ t₁/t_{D1} < 0.1, and/or the second cycle time t₂ is less than a flow time t_{D2} of the light phase (22) through the second channel (26), where in particular 0.001 ≤ t₂/t_{D2} < 1.0, preferably 0.005 ≤ t₂/t_{D2} < 0.5, more preferably 0.01 ≤ t₂/t_{D2} < 0.2 and particularly preferably 0.05 ≤ t₂/t_{D2} < 0.1.

3. Extractor according to Claim 1 or 2, **characterized in that** 0.01 s ≤ t₁ ≤ 10.0 s, in particular 0.1 s ≤ t₁ ≤ 5.0 s, preferably 0.5 s ≤ t₁ ≤ 2.0 s and particularly preferably 1.0 s ≤ t₁ ≤ 1.5 s and/or 0.01 s ≤ t₂ ≤ 10.0 s, in particular 0.1 s ≤ t₂ ≤ 5.0 s, preferably 0.5 s ≤ t₂ ≤ 2.0 s and particularly preferably 1.0 s ≤ t₂ ≤ 1.5 s.

4. Extractor according to one of Claims 1 to 3, **characterized in that** 0.1 ≤ t₁/t₂ < 1.0, in particular 0.2 ≤ t₁/t₂ ≤ 0.9, preferably 0.3 ≤ t₁/t₂ ≤ 0.7 and particularly preferably 0.4 ≤ t₁/t₂ ≤ 0.5 or 0.1 ≤ t₂/t₁ < 1.0, in particular 0.2 ≤ t₂/t₁ ≤ 0.9, preferably 0.3 ≤ t₂/t₁ ≤ 0.7 and particularly preferably 0.4 ≤ t₂/t₁ ≤ 0.5.

5. Extractor according to one of Claims 1 to 4, **characterized in that** the first valve (28) and/or the second valve (30) is designed as a nonreturn valve.

6. Extractor according to Claim 5, **characterized in that** the first valve (28) has a first closing element, which is movable substantially transversely in relation to the radial direction, in particular a nonreturn ball (66), for opening and/or closing the first channel (24) and/or the second valve (30) has a second closing element, which is movable substantially transversely in relation to the radial direction, in particular a nonreturn ball, for opening and/or closing the second channel (28).

7. Method for carrying out a centrifugal extraction, in particular for the separation and/or extraction and/or chromatography of a sample, comprising the steps of rotating an extractor (10), in particular according to one of Claims 1 to 6, with a chamber cascade (12) having a heavy phase (20) and a light phase (22), the chamber cascade (12) having a first channel (24), connected to a first chamber (14) and a second chamber (16), for discharging the heavy phase (20) from the first chamber (14) and for feeding the heavy phase (20) into the second chamber (16) and a second channel (26), connected to the second chamber (16) and the first chamber (14), for discharging the light phase (22) from the second chamber (16) and for feeding the light phase (22) into the first chamber (14), the first channel (24) having a first valve (28), for preventing a back-flow from the second chamber (16) into the first chamber (14), and/or the second channel (26) having a second valve (30) for preventing a back-flow from the first chamber (14) into the second chamber (16),
feeding a sample into the chamber cascade (12), the sample having components that dissolve variously well in the heavy phase and the light phase, and
pumping the heavy phase (20) in a first circumferential direction (36) and pumping the light phase (22) in a second circumferential direction (44) opposite to the first circumferential direction (36), it being ensured with the aid of the first valve (28) and/or the second valve (30) that there is only a flow along the intended direction of flow, and substantially only the heavy phase (20) flows completely through the first channel (24) and substantially only the light phase (22) flows completely through the second channel (26).

8. Method according to Claim 7, in which alternately either the heavy phase (20) is pumped over a first cycle time t₁ or the light phase (22) is pumped over a second cycle time t₂, the first cycle time t₁ being less than a flow time t_{D1} of the heavy phase (20) through the first channel (24), where in particular 0.001 ≤ t₁/t_{D1} < 1.0, preferably 0.005 ≤ t₁/t_{D1} < 0.5, more preferably 0.01 ≤ t₁/t_{D1} < 0.2 and particularly preferably 0.05 ≤ t₁/t_{D1} < 0.1, and/or the second cycle time t₂ being less than a flow time t_{D2} of the light phase (22) through the second channel (26), where in particular 0.001 ≤ t₂/t_{D2} < 1.0, preferably 0.005 ≤ t₂/t_{D2} < 0.5, more preferably 0.01 ≤ t₂/t_{D2} < 0.2 and particularly preferably 0.05 ≤ t₂/t_{D2} < 0.1.

9. Method according to Claim 8, in which the second channel (28) is shut off during the pumping of the heavy phase (20) and/or the first channel (24) is shut off during the pumping of the light phase (22).

## Revendications

1. Extracteur pour une extraction par distribution centrifuge, comprenant
une cascade de chambres (12)disposée dans la direction périphérique d'un champ centrifuge désigné pour recevoir une phase lourde (20) et une phase légère (22), la cascade de chambres (12) présentant au moins une première chambre (14) et au moins une deuxième chambre (16),
un premier dispositif de pompage (32) connecté à la cascade de chambres (12) pour pomper la phase lourde (20) à travers la cascade de chambres (12) le long d'une première direction périphérique (36),
un deuxième dispositif de pompage (40) connecté à la cascade de chambres (12) pour pomper la phase légère (22) à travers la cascade de chambres (12) le long d'une deuxième direction périphérique (44) opposée à la première direction périphérique (36), un premier canal (24) connecté à la première chambre (14) et à la deuxième chambre (16), pour évacuer la phase lourde (20) hors de la première chambre (14) et pour acheminer la phase lourde (20) dans la deuxième chambre (16) et
un deuxième canal (26) connecté à la deuxième chambre (16) et à la première chambre (14) pour évacuer la phase légère (22) hors de la deuxième chambre (16) et pour acheminer la phase légère (22) dans la première chambre (14),
**caractérisé en ce que**
le premier canal (24) présente une première soupape (28) pour bloquer un reflux depuis la deuxième chambre (16) dans la première chambre (14) et/ou le deuxième canal (26) présente une deuxième soupape (30) pour bloquer un reflux depuis la première chambre (14) dans la deuxième chambre (16), et
un dispositif de commande (48) est prévu pour faire fonctionner le premier dispositif de pompage (32) et le deuxième dispositif de pompage (40), le dispositif de commande (48) étant configuré de telle sorte que pendant le fonctionnement normal, soit le premier dispositif de pompage (32) fonctionne avec un premier temps de cycle t₁ soit le deuxième dispositif de pompage (40) fonctionne avec un deuxième temps de cycle t₂, un écoulement étant assuré seulement le long de la direction d'écoulement envisagée à l'aide de la première soupape (28) et/ou de la deuxième soupape (30) et le premier temps de cycle t₁ et le deuxième temps de cycle t₂ étant choisis de telle sorte qu'un passage complet à travers le premier canal (24) s'effectue essentiellement seulement par la phase lourde (20) et qu'un passage complet à travers le deuxième canal (26) s'effectue essentiellement seulement par la phase légère (22).

2. Extracteur selon la revendication 1, **caractérisé en ce que** le premier temps de cycle t₁ est inférieur à un temps de passage t_{D1} de la phase lourde (20) à travers le premier canal (24), en particulier 0,001 ≤ t₁/t_{D1} < 1,0, de préférence 0,005 ≤ t₁/t_{D1} < 0,5, plus préférablement 0,01 ≤ t₁/t_{D1} < 0,2, et particulièrement préférablement 0,05 ≤ t₁/t_{D1} < 0,1, et/ou le deuxième temps de cycle t₂ est inférieur à un temps de passage t_{D2} de la phase légère (22) à travers le deuxième canal (26), en particulier 0,001 ≤ t₂/t_{D2} < 1,0, de préférence 0,005 ≤ t₂/t_{D2} < 0,5, plus préférablement 0,01 ≤ t₂/t_{D2} < 0,2, et particulièrement préférablement 0,05 ≤ t₂/t_{D2} < 0,1.

3. Extracteur selon la revendication 1 ou 2, **caractérisé en ce que** 0,01 s ≤ t₁ ≤ 10,0 s, en particulier 0,1 s ≤ t₁ ≤ 5,0 s, de préférence 0,5 s ≤ t₁ ≤ 2,0 s et particulièrement préférablement 1,0 s ≤ t₁ ≤ 1,5 s, et/ou 0,01 s ≤ t₂ ≤ 10,0 s, en particulier 0,1 s ≤ t₂ ≤ 5,0 s, de préférence 0,5 s ≤ t₂ ≤ 2,0 s et particulièrement préférablement 1,0 s ≤ t₂ ≤ 1,5 s.

4. Extracteur selon l'une quelconque des revendications 1 à 3, **caractérisé en ce que** 0,1 ≤ t₁/t₂ < 1,0, en particulier 0,2 ≤ t₁/t₂ ≤ 0,9, de préférence 0,3 ≤ t₁/t₂ ≤ 0,7, et particulièrement préférablement 0,4 ≤ t₁/t₂ ≤ 0,5 ou 0,1 ≤ t₂/t₁ < 1,0, en particulier 0,2 ≤ t₂/t₁ ≤ 0,9, de préférence 0,3 ≤ t₂/t₁ ≤ 0,7, et particulièrement préférablement 0,4 ≤ t₂/t₁ ≤ 0,5.

5. Extracteur selon l'une quelconque des revendications 1 à 4, **caractérisé en ce que** la première soupape (28) et/ou la deuxième soupape (30) sont configurées sous forme de clapet antiretour.

6. Extracteur selon la revendication 5, **caractérisé en ce que** la première soupape (28) présente un premier élément de fermeture déplaçable essentiellement transversalement à la direction radiale, en particulier une bille anti-retour (66), pour ouvrir et/ou fermer le premier canal (24), et/ou la deuxième soupape (30) présente un deuxième élément de fermeture déplaçable essentiellement transversalement à la direction radiale, en particulier une bille anti-retour, pour ouvrir et/ou fermer le deuxième canal (28).

7. Procédé pour mettre en œuvre une extraction centrifuge, en particulier pour la séparation et/ou l'extraction et/ou la chromatographie d'un échantillon, comprenant les étapes de rotation d'un extracteur (10), en particulier selon l'une quelconque des revendications 1 à 6, comprenant une cascade de chambres (12) présentant une phase lourde (20) et une phase légère (22), la cascade de chambres (12) présentant un premier canal (24) connecté à une première chambre (14) et à une deuxième chambre (16) pour évacuer la phase lourde (20) hors de la première chambre (14) et pour acheminer la phase lourde (20) dans la deuxième chambre (16) et un deuxième canal (26) connecté à la deuxième chambre (16) et à la première chambre (14) pour évacuer la phase légère (22) hors de la deuxième chambre (16) et pour acheminer la phase légère (22) dans la première chambre (14), le premier canal (24) présentant une première soupape (28) pour bloquer un reflux depuis la deuxième chambre (16) dans la première chambre (14) et/ou le deuxième canal (26) présentant une deuxième soupape (30) pour bloquer un reflux depuis la première chambre (14) dans la deuxième chambre (16),
introduction d'un échantillon dans la cascade de chambres (12), l'échantillon présentant des composants se dissolvant bien dans la phase lourde et dans la phase légère, et
pompage de la phase lourde (20) dans une première direction périphérique (36) et pompage de la phase légère (22) dans une deuxième direction périphérique (44) opposée à la première direction périphérique (36), un écoulement s'effectuant seulement le long de la direction d'écoulement envisagée à l'aide de la première soupape (28) et/ou de la deuxième soupape (30) et un passage complet à travers le premier canal (24) étant effectué essentiellement seulement par la phase lourde (20) et un passage complet à travers le deuxième canal (26) étant effectué essentiellement seulement par la phase légère (22).

8. Procédé selon la revendication 7, dans lequel, en alternance, soit la phase lourde (20) est pompée pendant un premier temps de cycle t₁ soit la phase légère (22) est pompée pendant un deuxième temps de cycle t₂, le premier temps de cycle t₁ étant inférieur à un temps de passage t_{D1} de la phase lourde (20) à travers le premier canal (24), en particulier 0,001 ≤ t₁/t_{D1} < 1,0, de préférence 0,005 ≤ t₁/t_{D1} < 0,5, plus préférablement 0,01 ≤ t₁/t_{D1} < 0,2, et particulièrement préférablement 0,05 ≤ t₁/t_{D1} < 0,1, et/ou le deuxième temps de cycle t₂ étant inférieur à un temps de passage t_{D2} de la phase légère (22) à travers le deuxième canal (26), en particulier 0,001 ≤ t₂/t_{D2} < 1,0, de préférence 0,005 ≤ t₂/t_{D2} < 0,5, plus préférablement 0,01 ≤ t₂/t_{D2} < 0,2, et particulièrement préférablement 0,05 ≤ t₂/t_{D2} < 0,1.

9. Procédé selon la revendication 8, dans lequel, pendant le pompage de la phase lourde (20), le deuxième canal (28) est bloqué et/ou pendant le pompage de la phase légère (22) le premier canal (24) est bloqué.
